Europäisches Patentamt

European Patent Office

Office européen des brevets

(11) Numéro de publication : **0 332 550 B1**

## (12) FASCICULE DE BREVET EUROPEEN

(45) Date de publication du fascicule du brevet :
**23.12.92 Bulletin 92/52**

(51) Int. Cl.$^5$ : **A01G 9/18, C02F 1/02**

(21) Numéro de dépôt : **89430002.9**

(22) Date de dépôt : **03.02.89**

(54) **Générateur pour produire simultanément de l'eau chaude de qualité potable et du dioxyde de carbone et installations agricoles d'application.**

(30) Priorité : **08.03.88 FR 8803147**

(43) Date de publication de la demande :
**13.09.89 Bulletin 89/37**

(45) Mention de la délivrance du brevet :
**23.12.92 Bulletin 92/52**

(84) Etats contractants désignés :
**AT BE CH DE ES FR GB GR IT LI LU NL SE**

(56) Documents cités :
**EP-A- 0 264 907**
**WO-A-83/00210**
**BE-A- 395 341**
**CH-A- 663 076**
**FR-A- 2 098 947**
**FR-A- 2 575 633**
**US-A- 3 428 559**

(73) Titulaire : **Dalle, Yves**
**27, rue Eugène Pelletan**
**F-13410 Lambesc (FR)**
Titulaire : **Serres, Guy**
**Les Logissons**
**F-13510 Eguilles (FR)**

(72) Inventeur : **Dalle, Yves**
**27, rue Eugène Pelletan**
**F-13410 Lambesc (FR)**
Inventeur : **Serres, Guy**
**Les Logissons**
**F-13510 Eguilles (FR)**

(74) Mandataire : **Moretti, René et al**
**c/o Cabinet BEAU DE LOMENIE**
**"Prado-Mermoz" 232, Avenue du Prado**
**F-13008 Marseille (FR)**

## Description

La présente invention a pour objet un générateur pour produire simultanément, à partir d'eau polluée, de l'eau à basse température de qualité dite eau potable et du dioxyde de carbone.

Le secteur technique de l'invention est celui des procédés et des dispositifs générateurs d'eau chaude et des installations comprenant de tels générateurs.

Un générateur de fluide liquide chauffant et récupérateur de gaz alimentaire pour application agricole, est décrit dans le brevet FR.A 2 575 633. Selon ce brevet, ledit dispositif comporte un élément diviseur constitué par un lit d'anneaux de céramique ou autre matière, sur lequel on pulvérise de l'eau à contre courant des gaz de combustion produits par un brûleur. Le gaz de $CO_2$ traverse le lit d'anneaux et est recueilli à la partie supérieure de l'appareil pour être utilisé en agriculture, l'eau recueillie chaude à sa partie inférieure est utilisée comme fluide caloporteur à des fins agricoles ou autres applications.

Pour la production d'eau potable à partir d'eaux polluées, on connaît de nombreux procédés qui sont le plus souvent basés sur un cycle d'évaporation des eaux polluées-condensation des vapeurs d'eau. La mise en oeuvre de tels procédés conduit à une consommation d'énergie très importante et nécessite l'utilisation d'installations relativement complexes et coûteuses.

L'objectif de la présente invention est de produire de l'eau potable à partir d'eaux polluées avec une très faible consommation d'énergie et donc à un coût réduit.

Les déposants ont participé depuis longtemps au développement et à la mise au point de chaudières à condensation pour différentes applications. Au cours de très nombreux essais, ils ont pu constater que des eaux chargées envoyées à travers une telle chaudière présentaient à la sortie de celle-ci un aspect d'eaux claires. Des analyses d'eaux comparatives ont démontré d'une manière inattendue, qu'en réglant convenablement le fonctionnement d'une chaudière à condensation alimentée avec des eaux polluées, on obtient des eaux de qualité eau potable.

Dans la mise en oeuvre de l'invention, cet effet est obtenu sans coût complémentaire du fait que la chaudière produit de l'eau chaude, par exemple pour des applications de chauffage ou encore l'irrigation des serres de culture et du $CO_2$ pur pour des applications agricoles en vue d'accélérer le développement des plantes.

La présente invention a pour objet un générateur pour la production, dans des conditions particulièrement efficaces et économiques, outre du $CO_2$ pur, mais encore de l'eau de qualité potable à partir d'eaux polluées.

Le générateur selon la présente invention comporte une enveloppe extérieure, au moins un lit d'anneaux en céramique ou similaire disposé dans ladite enveloppe, un brûleur et des moyens disposés à la partie supérieure du générateur pour pulvériser l'eau polluée admise dans celui-ci sur ledit lit d'anneaux, dont la partie inférieure de ladite enveloppe délimite une chambre d'échange thermique communiquant avec un bac de récupération d'eau de qualité potable situé à la partie inférieure du générateur et un conduit d'évacuation des gaz de combustion qui débouche dans la partie supérieure du générateur et qui comporte des moyens de prélèvement du dioxyde de carbone, et se caractérise en ce que ladite enveloppe extérieure est cylindrique et verticale et réalisée en un matériau non réfractaire et que le générateur comporte en outre une chemise cylindrique intérieure réalisée en un matériau réfractaire disposée coaxialement à ladite enveloppe extérieure pour délimiter avec ladite enveloppe un espace annulaire occupé par un lit supérieur d'anneaux en céramique et au moins un lit inférieur d'anneaux métalliques qui entourent la partie inférieure de ladite chemise, laquelle est perforée et constitue une chambre d'échange thermique et un bac de réception de l'eau dépolluée, en ce que la partie supérieure de la chemise délimite une chambre de combustion dans laquelle débouche ledit brûleur, lequel est un brûleur à gaz et est entouré par lesdits moyens pulvérisateurs de l'eau polluée qui pulvérisent l'eau dans ledit espace annulaire, pour qu'elle s'écoule à travers lesdits anneaux et en ce que la puissance du brûleur et le débit d'eau polluée sont réglés de telle sorte qu'on obtienne au niveau du lit inférieur une charge thermique assurant la température instantanée des gouttelettes d'eau, égale ou supérieure à 100°C au moment de leur impact sur lesdits anneaux métalliques dudit lit inférieur et la stérilisation de l'eau polluée en vue de recueillir dans ledit bac de l'eau de qualité potable.

Dans un mode de réalisation du générateur selon l'invention, la section du lit inférieur d'anneaux métalliques diminue vers le bas.

De plus et selon l'invention, la paroi délimitant ladite chambre d'échange thermique présente des perforations régulièrement espacées, ce qui constitue une structure particulièrement simple et peu coûteuse.

Ledit lit supérieur d'anneaux en céramique comporte une partie supérieure extrême annulaire qui est située au-dessus des moyens qui pulvérisent l'eau sur ledit lit supérieur. Cette caractéristique assure une élimination efficace des gouttelettes d'eau dans les gaz de combustion traversant les deux lits d'anneaux avant leur évacuation en vue de leur utilisation ultérieure.

De plus et selon l'invention, lesdits moyens de prélèvement de gaz sont constitués par une simple canalisation branchée en dérivation sur le conduit d'évacuation du générateur.

2

Le générateur selon l'invention comporte en outre, au niveau dudit bac de récupération, une canalisation d'évacuation d'eau traitée, laquelle canalisation comporte un siphon à son extrémité située dans ledit bac.

Dans un autre mode de réalisation, le générateur selon l'invention se caractérisé par le fait que la paroi de la chemise intérieure est constituée par une double enveloppe dont l'espace annulaire délimité par les deux enveloppes est obturé à la partie inférieure de la chemise où aboutissent plusieurs tubes d'alimentation en eau polluée. La double enveloppe est ouverte à la partie supérieure de la chemise de telle sorte que l'eau mise en circulation dans ledit espace annulaire, dans le sens opposé à celui de la flamme du brûleur, s'écoule le long de la paroi interne de la double enveloppe, à proximité de la flamme du brûleur, avant d'être récupérée par le bac.

Ledit générateur comporte également, entre la chemise intérieure à double enveloppe, prolongée par le bac de récupération d'eau de qualité potable et l'enveloppe cylindrique extérieure, une paroi cylindrique qui délimite une enceinte cylindrique coaxiale fermée à sa partie inférieure, laquelle enceinte est ouverte à sa partie supérieure et comporte au-dessus, un déflecteur tronconique dont les génératrices de sa paroi convergent sur l'axe de la chemise cylindrique et du côté du brûleur, lequel déflecteur recouvre en débordant, la partie ouverte de l'enceinte cylindrique et délimite avec celle-ci un espace à travers lequel passent les gaz de combustion.

Le lit inférieur d'anneaux métalliques occupe l'espace annulaire délimité d'une part, par la double enveloppe prolongée par la paroi cylindrique perforée et d'autre part, par la paroi de l'enceinte et le déflecteur.

Ledit générateur comporte en outre, au-dessus de la chemise intérieure à double paroi, un bac annulaire qui entoure la tête du brûleur, dans lequel bac est admise l'eau polluée. Ledit bac comporte, à sa partie inférieure, des diffuseurs régulièrement répartis autour de ladite chemise intérieure et comporte en outre une paroi cylindrique qui prolonge sa paroi périphérique du côté dudit déflecteur, laquelle paroi cylindrique pénètre en partie le lit supérieur d'anneaux en céramique.

Celui-ci occupe l'espace délimité par l'enveloppe extérieure et l'ensemble central : chemise intérieure / déflecteur / enceinte cylindrique, de telle sorte que l'eau issue des diffuseurs est pulvérisée dans l'espace annulaire délimité par ladite paroi cylindrique du bac et la chemise intérieure, et s'écoule à travers le lit d'anneaux en céramique, jusqu'à la partie inférieure du générateur où elle est récupérée.

Le lit d'anneaux en céramique est situé au-dessus d'un lit support percolant qui occupe l'espace annulaire compris entre ladite enceinte cylindrique et l'enveloppe cylindrique extérieure, située à la partie inférieure du générateur.

Un espace est réservé entre la partie supérieure du lit supérieur d'anneaux en céramique et la partie supérieure du générateur, dans lequel espace débouche le conduit d'évacuation des gaz de $CO_2$.

Le générateur comporte encore, dans ledit espace situé au-dessus du lit supérieur d'anneaux en céramique et autour dudit bac annulaire, une rampe d'alimentation en eau polluée à laquelle sont reliés les tubes qui alimentent ladite double enveloppe.

Le générateur comporte également, à sa partie inférieure, une tubulure d'évacuation de l'eau s'écoulant à travers le lit d'anneaux en céramique et à travers le lit support percolant par l'intermédiaire d'une crépine située dans l'espace annulaire délimité par l'enveloppe extérieure et l'enceinte cylindrique, laquelle crépine est entourée de matériau percolant.

Selon l'invention et du fait de la structure coaxiale du générateur, on obtient un écoulement régulier et uniforme dans tout l'espace annulaire délimité par l'enveloppe extérieure et la chemise aussi bien de l'eau que des gaz de combustion tout en évitant la formation de circuits préférentiels et ceci en particulier au niveau dudit lit inférieur dans lequel on obtient un contact uniforme entre les gaz, l'eau et les anneaux métalliques.

A titre d'application de tels générateurs, l'invention concerne également des installations pour la production et la distribution d'eau chaude à basse température et de dioxyde de carbone dans une serre agricole.

Une installation pour la production et la distribution d'eau chaude à basse température et de dioxyde de carbone dans une serre agricole et comportant un générateur selon le premier mode de réalisation qui vient d'être exposé comporte : un premier réservoir d'eau non potable, des moyens pour capter l'eau dudit réservoir et pour l'envoyer dans ledit générateur; un second réservoir alimenté par le générateur en eau de qualité potable, issue du bac de récupération, des moyens pour capter de l'eau contenue dans le second réservoir et pour refouler cette eau dans un circuit de chauffage à basse température, des plantations élevées dans la serre et des moyens pour retourner cette eau refroidie dans ledit second réservoir; des moyens pour capter de l'eau chaude, de qualité potable, contenue dans ledit second réservoir et pour refouler cette eau dans un réseau d'irrigation et des moyens reliant le conduit d'échappement de $CO_2$ dudit générateur à la serre de culture.

Dans un autre mode d'exécution, une installation pour la production et la distribution d'eau chaude à basse température et du dioxyde de carbone dans une serre agricole et comportant un générateur selon le deuxième mode de réalisation exposé ci-dessus comporte : un premier réservoir d'eau, non potable; des moyens pour capter l'eau dudit réservoir et pour l'envoyer dans ledit générateur, des moyens pour alimenter ledit premier réservoir en eau chaude non potable provenant du générateur et qui a traversé les lits d'anneaux de céramique et le lit support percolant; des moyens pour capter de l'eau chaude, non potable, dans ledit premier réservoir et pour refouler cette eau dans un circuit de chauffage à basse température des plantations élevées dans la serre et des moyens pour retourner cette eau refroidie dans ledit premier réservoir; un second réservoir, des moyens pour alimenter ledit second réservoir en eau chaude de qualité potable provenant du bac de récupération du générateur; des moyens pour capter de l'eau chaude, de qualité potable, contenue dans le réservoir et pour refouler cette eau dans un réseau d'irrigation et des moyens reliant ledit conduit d'échappement du $CO_2$ dudit générateur à la serre.

Dans de telles installations, les gaz de $CO_2$ sont refoulés dans la serre au moyen d'un ventilateur.

D'autres caractéristiques et avantages de l'invention ressortiront encore à la lecture de la description suivante en référence aux dessins annexés sur lesquels:

- la figure 1 est une vue en coupe verticale schématique d'un mode de réalisation d'un générateur suivant l'invention;
- la figure 2 est une vue en coupe verticale schématique d'un autre mode de réalisation dudit générateur;
- la figure 3 est une vue schématique d'une installation selon la présente invention produisant de l'eau de chauffage, de l'eau d'irrigation et du dioxyde de carbone destiné à être envoyé dans une serre agricole;
- la figure 4 est une vue schématique d'une installation selon l'invention dans une organisation différente de celle de la figure 3 et produisant de l'eau de chauffage, de l'eau d'irrigation et du dioxyde de carbone destiné à être envoyé dans une serre agricole.

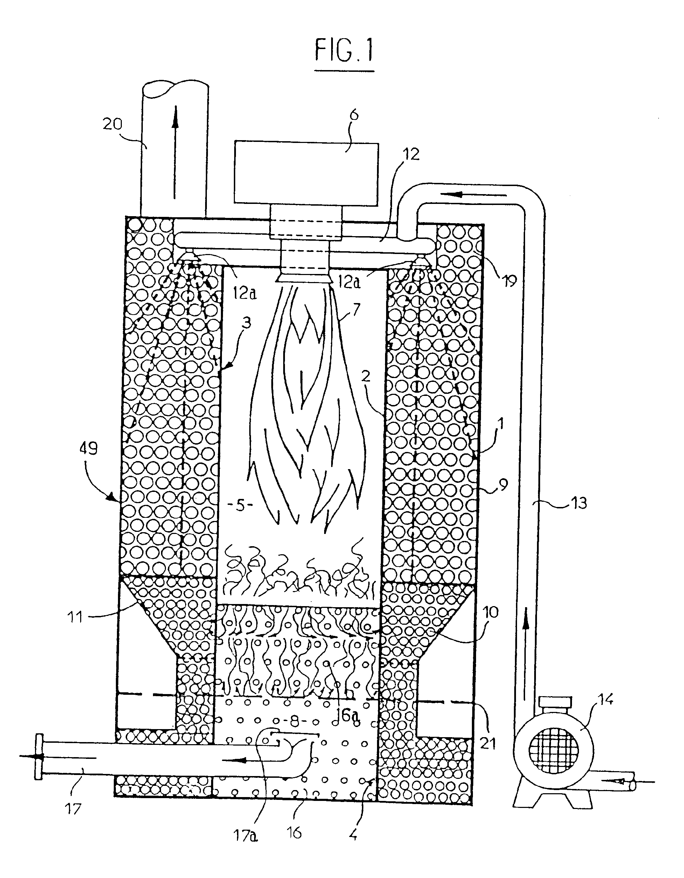

Le générateur, selon la présente invention, représenté à la figure 1 comporte une enveloppe cylindrique verticale extérieure 1, qui est réalisée en une matière non réfractaire, par exemple en polyéthylène moulé. Ceci est possible car cette enveloppe 1 n'est pas au contact avec les parties portées à haute température du générateur et permet la réalisation d'une structure très légère et peu coûteuse.

A l'intérieur de l'enveloppe extérieure 1 est disposée une chemise cylindrique 2 coaxiale à l'enveloppe 1, laquelle est réalisée en une matière résistant à des hautes températures, par exemple en acier inoxydable. La chemise 2 s'étend sensiblement sur toute la hauteur de l'enveloppe 1 et comporte une partie supérieure en tôle pleine 3 et une partie inférieure 4 en tôle perforée. La partie supérieure 3 délimite une chambre de combustion 5 à l'extrémité supérieure de laquelle est prévu un brûleur à gaz 6 dont la flamme est référencée 7.

La partie inférieure 4 de la chemise intérieure 2, qui est également réalisée en une matière réfractaire et incorrodable, délimite une chambre d'échange thermique 8 et suivant une caractéristique essentielle de la présente invention, les dimensions de la partie supérieure 3 délimitant la chambre de combustion 5 sont telles qu'on obtient dans cette chambre 5 une combustion sensiblement complète des gaz brûlés par le brûleur 6.

L'espace annulaire, délimité par l'enveloppe extérieure 1 et la chemise intérieure 2, est occupé par un lit supérieur d'anneaux en céramique 9 et un lit inférieur d'anneaux en acier inoxydable 10. Le dernier lit 10 présente une configuration torique dont la section diminue vers le bas et est à cet effet délimité par une jupe conique en tôle réfractaire 11 dont les génératrices convergent sur l'axe de la chemise 2. Cette structure présente également une caractéristique essentielle de la présente invention comme décrit ci-après.

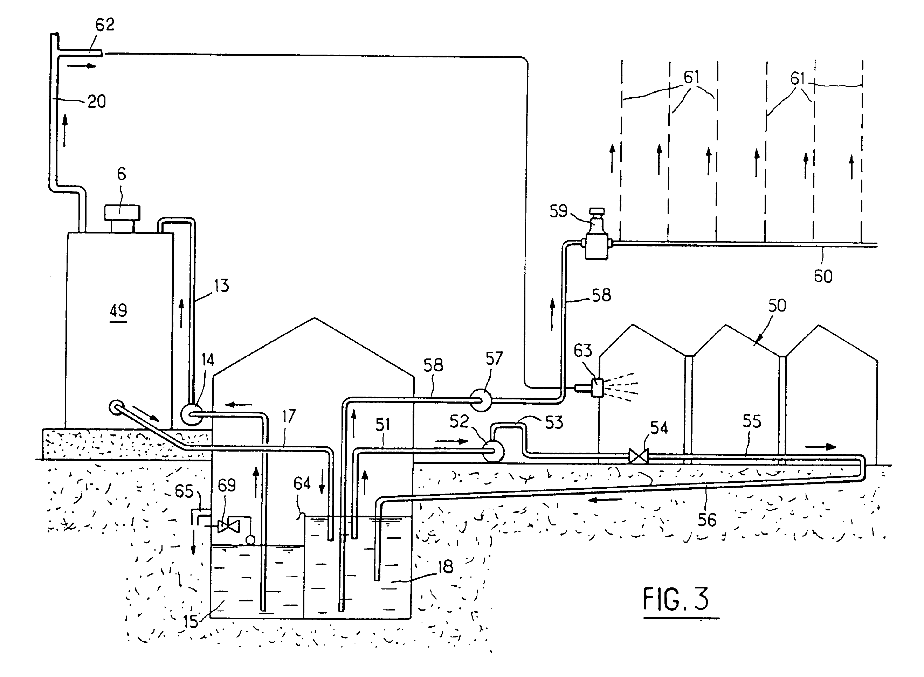

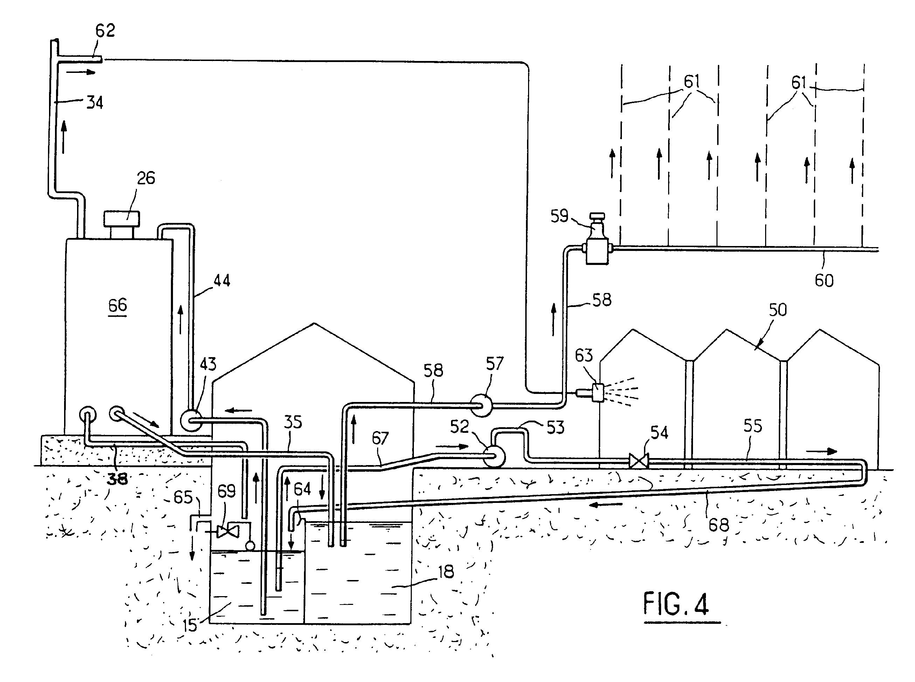

Ledit générateur comporte, à sa partie supérieure, une rampe de pulvérisation d'eau 12, alimentée par une canalisation 13 et au moyen d'une pompe 14 qui met en circulation de l'eau polluée prélevée par exemple dans un réservoir de stockage d'eau 15 (figures 3 et 4). Cette rampe 12 comporte des diffuseurs 12a qui pulvérisent l'eau sur la partie supérieure du lit d'anneaux en céramique 9. L'eau s'écoule à travers ce lit 9 et le lit d'anneaux métalliques 10 dans la chambre d'échange thermique 8 et est récupérée dans un bac de récupération 16 prévu à l'extrémité inférieure du générateur. A partir de ce bac 16, l'eau est envoyée à travers une canalisation de récupération 17, par exemple dans un réservoir d'eau traitée 18 tel que représenté à la figure 3.

La canalisation 17 comporte de préférence à son extrémité située dans le générateur, un siphon 17a disposé au centre du bac de récupération 16.

A la partie supérieure du lit d'anneaux en céramique 9 est prévue, selon l'invention, une partie annulaire 19 qui communique avec un conduit d'évacuation des gaz de combustion 20, laquelle partie annulaire n'est pas traversée par l'eau pulvérisée par la rampe 12 pour éviter que de l'eau ne soit entraînée par les gaz lors de leur évacuation par la canalisation 20.

De préférence, les anneaux en céramique du lit supérieur 9 sont des anneaux tels que distribués par la Société dite FUCH LETSCHERT sous la dénomination commerciale "Füllkörper aus Steinzeug - Rachy - Ringe" et les anneaux du lit inférieur 10 sont réalisés en un acier réfractaire austénitique au chrome nickel tel que par exemple distribué par la Société dite UGINE ACIERS sous la dénomination commerciale "NS 30".

Le générateur, selon l'invention, représenté à la figure 1 et décrit ci-dessus fonctionne de la manière suivante :

De l'eau polluée est prélevée au moyen de la pompe 14 à partir du premier réservoir de stockage 15 et est envoyée, par la canalisation 13, à la rampe de pulvérisation 12 du générateur. L'eau est projetée par les diffuseurs 12a sous la forme de jets et s'écoule à travers le lit supérieur d'anneaux en céramique 9 et à travers le lit inférieur d'anneaux métalliques 10, dans la partie inférieure du générateur, pour être recueillie dans le bac de récupération 16. A partir de ce bac 16, l'eau chauffée et traitée est prélevée à travers la canalisation 17 pour être envoyée dans le deuxième réservoir de stockage 18, représenté à la figure 3. Dans le bac de récupération 16, l'eau est maintenue à un niveau constant comme indiqué en 21. Le prélèvement des eaux chaudes et traitées est réalisé à travers un siphon 17a, encore appelé "cloche", pour éviter le passage des gaz de combustion à travers la conduite d'évacuation 17. Le brûleur à gaz 6 est réglé en fonction de la section et de la hauteur de la chambre de combustion 5, de sorte que les gaz de combustion produits par la flamme subissent une combustion complète avant d'atteindre la chambre d'échange thermique 8. On assure ainsi la production de gaz de combustion contenant essentiellement des molécules de dioxyde de carbone qui peuvent après refroidissement, lavage et séchage dans le générateur selon l'invention être utilisés directement pour l'alimentation de serres agricoles comme décrit plus loin en se référant à la figure 3.

Les gaz de combustion produits par le brûleur 6 s'écoulent vers le bas à travers la chambre d'échange thermique 8, passent par les orifices 16a du bac 16 et sont évacués vers le haut à travers les lits d'anneaux 10 et 9 pour être canalisés dans le conduit d'évacuation 20. Pendant ce passage, les gaz de combustion produisent un échauffement des gouttelettes d'eau s'écoulant vers le bas à partir de la rampe 12.

La puissance du brûleur 6 et le débit d'eau à partir de la rampe 12 sont réglés suivant l'invention d'une manière telle qu'on obtient au niveau du lit inférieur 10 une charge thermique suffisante pour assurer que la température instantanée des gouttelettes d'eau soit égale ou supérieure à 100°C au moment de leur impact sur les anneaux métalliques du lit inférieur 10.

Selon cette caractéristique de l'invention, on obtient un effet de stérilisation de l'eau polluée envoyée à travers le générateur et l'eau récupérée au niveau du bac 16 est d'une qualité dite eau potable.

Lors de leur passage à travers le lit supérieur d'anneaux en céramique 9, les gaz de combustion subissent un refroidissement notable. Ce lit 9 permet également l'élimination de toute trace de $SO_2$ dans les gaz de combustion qui pourrait être nuisible aux plantes. La partie annulaire 19 du lit supérieur 9 assure l'élimination des gouttelettes d'eau des gaz de combustion. On obtient ainsi au niveau du conduit d'évacuation, un gaz de faible température saturé sans gouttelettes d'eau et purifié, pouvant être envoyé directement dans une serre agricole, pour favoriser le développement des plantes.

Au cours d'une série d'essais du générateur dans le mode de réalisation de la figure 1, il a été utilisé des eaux polluées dont l'analyse d'eau donnait les résultats suivants :
- germes totaux 37/ML                  : 300
- germes totaux 20-22/ML            : 400
- escherichia coli/100 ML             : 0
- coliformes/100 ML                    : 0
- anaerobies sulf.red/100 ML      : 17
- streptocoques fécaux/100 ML    : 6

Les eaux ont été envoyée à travers un générateur selon l'invention convenablement réglé suivant les enseignements de l'invention et l'analyse des eaux récupérées après un seul passage à travers le générateur a donné les résultats suivants :
- germes totaux 37/ML                  : 320
- germes totaux 20-22/ML            : 800
- escherichia coli/100 ML             : 0
- coliformes/100 ML                    : 0
- anaerobies sulf.red/100 ML      : 0
- streptocoques fécaux/100 ML    : 0

De telles eaux sont des eaux de qualité potable et l'effet recherché par l'invention est ainsi parfaitement obtenu.

Les analyses d'eau ci-dessus ont été effectuées par les Laboratoires de Bromatologie du Groupe Bureau Veritas à EGUILLES, France.

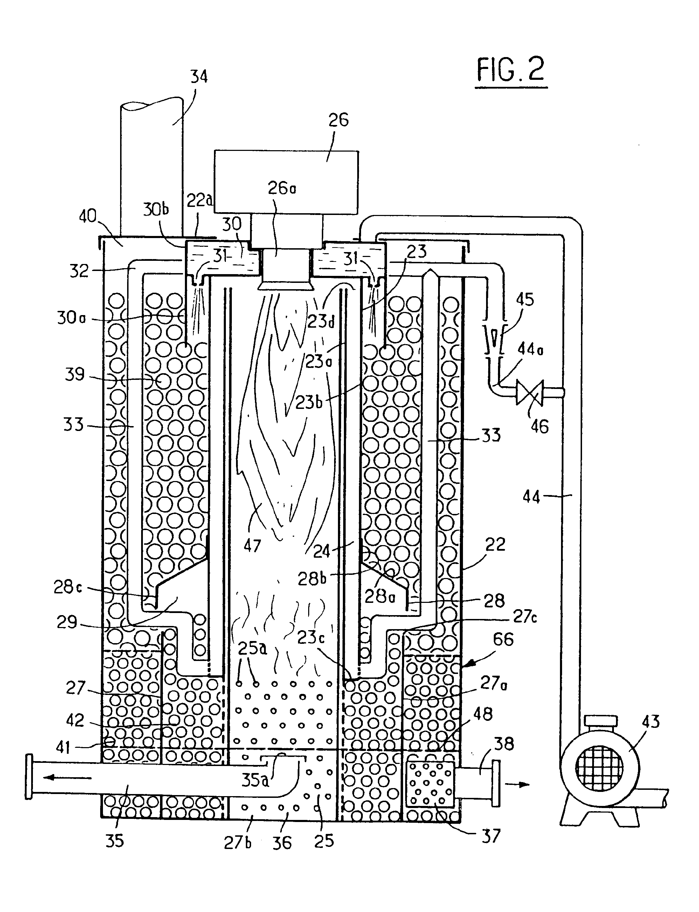

Un autre mode de réalisation d'un générateur selon l'invention est illustré à la figure 2 du dessin.

La configuration générale d'un tel générateur est analogue à celle du générateur de la figure 1. Comme celui-ci, un tel générateur comporte une enveloppe cylindrique 22, par exemple en polyéthylène moulé et une chemise intérieure 23, lesquelles enveloppe et chemise sont coaxiales.

La paroi de la chemise 23 est constituée par une double enveloppe dont l'espace annulaire 24, délimité par les deux enveloppes 23a/23b, est obturé par une paroi 23c à la partie inférieure de la chemise 23. La double enveloppe est ouverte à la partie supérieure 23d de la dite chemise.

Celle-ci est réalisée par exemple en acier inoxydable et s'étend sur la quasi hauteur de l'enveloppe extérieure 22. Au-dessous de la double enveloppe 23a/23b, la chemise se prolonge par une partie cylindrique perforée 25.

La partie supérieure de la chemise, constituée par la double enveloppe, forme une chambre de combustion.

Un brûleur à gaz 26 est prévu à la partie supérieure du générateur dont la tête 26a dudit brûleur est disposée coaxialement à la chemise 23 et débouche dans cette dernière à sa partie supérieure.

La partie inférieure perforée 25 de la chemise 23 est réalisée en une matière réfractaire et incorrodable, par exemple en acier inoxydable et constitue une chambre d'échange thermique. Comme le générateur précédemment décrit, les dimensions de la partie supérieure de la chemise 23 délimitée par la double paroi 23a/23b et qui constitue ladite chambre de combustion sont telles, qu'on obtient dans cette chambre une combustion sensiblement complète des gaz brûlés par le brûleur 26.

Le générateur comporte entre la chemise 23 à double enveloppe prolongée par la paroi cylindrique perforée 25 et l'enveloppe extérieure 22, une autre paroi cylindrique 27a qui délimite une enceinte 27, laquelle est coaxiale à la chemise 23 et est fermée à sa partie inférieure 27b.

L'enceinte 27 est ouverte à sa partie supérieure 27c qui se situe sensiblement au tiers inférieur de la chemise 23. Elle comporte au-dessus de la partie ouverte 27c, un déflecteur tronconique 28 dont les génératrices de sa paroi 28a convergent sur l'axe de la chemise cylindrique 23 et du côté dudit brûleur 26.

Le déflecteur 28 comporte un col 28b qui entoure étroitement la paroi extérieure 23b de la double enveloppe à laquelle il est fixé par exemple par serrage et boulonnage. Sa périphérie inférieure 28c comporte un bord cylindrique sensiblement parallèle à l'axe de la chemise intérieure 23.

Le déflecteur 28 est ainsi coaxial à la chemise 23 et à l'enceinte 27. Il recouvre largement l'enceinte 27 et est éloigné de celle-ci pour ménager un espace périphérique 29 à travers lequel passent les gaz de combustion du brûleur 26.

Ledit générateur comporte au-dessus de la chemise 23 à double paroi 23a/23b, un bac annulaire 30 qui entoure la tête du brûleur 26, lequel bac comporte, à sa partie inférieure, des diffuseurs 31 régulièrement répartis autour de la chemise 23.

Le bac 30 comporte une paroi cylindrique 30a qui prolonge, du côté du déflecteur 28, sa paroi périphérique 30b.

Au niveau du bac annulaire 30 et autour de celui-ci, est disposée une rampe d'alimentation d'eau polluée 32, laquelle relie la partie inférieure de la double enveloppe 23a/23b de la chemise 23 au moyen de plusieurs tubes 33, par exemple au nombre de quatre, lesquels sont contre-coudés pour passer par l'espace réservé entre le déflecteur 28 et l'enceinte cylindrique 27.

A sa partie extrême supérieure, le générateur comporte un conduit d'évacuation du gaz de combustion 34, lequel débouche dans l'espace annulaire délimité entre le bac 30 et l'enveloppe extérieure 22.

A sa partie inférieure, ledit générateur comporte une tubulure d'évacuation de l'eau traitée de qualité potable 35, laquelle traverse les parois : perforée 25, de l'enceinte 27 et de l'enveloppe extérieure 22. Ladite tubulure 35 est par exemple soudée à la paroi de l'enceinte 27 pour rendre celle-ci étanche à l'eau et comporte, à son extrémité située sensiblement au centre de la partie cylindrique perforée 25 de la chemise 23, un siphon 35a encore appelé "cloche" pour empêcher que du gaz de combustion ne soit entraîné avec l'eau. Cette partie cylindrique perforée 25 constitue avec la partie inférieure de l'enceinte 27 un bac de réception de l'eau de qualité potable 36.

Dans l'espace annulaire délimité entre l'enveloppe extérieure 22 et l'enceinte cylindrique 27 et à la partie inférieure du générateur, est disposée une crépine 37 qui équipe une tubulure 38 d'évacuation de l'eau chaude polluée admise dans le générateur par les diffuseurs du bac annulaire 30.

L'espace annulaire compris entre l'enveloppe extérieure 22 et l'ensemble bac 30/chemise 23/déflecteur 28 et enceinte 27, est rempli d'anneaux en céramique 39, ce qui constitue ce que l'on a appelé précédemment en référence à la figure 1, un premier lit supérieur d'anneaux.

La partie supérieure du lit d'anneaux 39 délimite avec la paroi extrême supérieure 22a du générateur, une chambre annulaire 40 dans laquelle sont recueillis les gaz de combustion avant leur évacuation par le conduit 34. Au niveau de cette chambre 40, sont disposés le bac annulaire 30 et la rampe d'alimentation 32.

Dans un mode préféré de réalisation, ledit lit supérieur 39 occupe ledit espace annulaire compris entre la chambre 40 et la partie supérieure de l'enceinte cylindrique 27 à travers duquel lit passe une partie des tubes d'eau 33.

Selon ce mode d'exécution, l'espace annulaire compris entre le lit d'anneaux en céramique 39 et le fond du générateur est comblé par un lit support percolant par exemple un lit de pouzzolane 41, lequel entoure la crépine 37 et la tubulure 38.

En variante, le lit support 41 est constitué par un lit d'anneaux en céramique dont les anneaux sont identiques à ceux du lit supérieur 39 ou tous autres volumes supports similaires. Cette solution d'anneaux en céramique peut être toutefois avantageusement évitée pour des raisons de prix de revient du générateur.

L'espace annulaire compris entre d'une part la paroi de l'enceinte cylindrique 27 et le déflecteur 28 et d'autre part l'ensemble chemise intérieure 23/paroi perforée 25 est comblé par des anneaux 42 en matière réfractaire, tel que de l'acier inoxydable, et que l'on a appelé en référence à la figure 1, un lit inférieur d'anneaux en matière réfractaire. A travers ce lit passent d'une part une partie des tubes d'eau 33 et également une partie de la tubulure d'évacuation 35.

Les anneaux en céramique 39 et en matière réfractaire sont identiques à ceux précédemment définis en référence au générateur de la figure 1.

L'eau polluée est envoyée à la partie supérieure du générateur par une pompe 43 à travers une tubulure 44 qui est d'une part reliée à la partie supérieure du bac annulaire 30 et d'autre part par une dérivation 44a, à la rampe 32 qui délimite par l'intermédiaire des tubes 33 la double enveloppe 23a/23b.

La dérivation 44a comporte en amont de la rampe 32 d'abord un contrôleur de débit 45, par exemple un débit-mètre ou un compteur d'eau et ensuite une vanne de réglage 46.

Le fonctionnement du générateur qui vient d'être décrit en référence à la figure 2 est le suivant :

De l'eau polluée est refoulée par la pompe 43 à travers la tubulure 44 et suivant deux circuits distincts, d'une part dans le bac annulaire 30 et d'autre part dans la rampe 32.

L'eau admise dans le bac 30 est, par l'intermédiaire des diffuseurs 31, projetée sous la forme de jets sur le lit d'anneaux en céramique 39, dans l'espace annulaire alimenté par la paroi cylindrique 30a du bac 30 et la chemise extérieure 23b de la double enveloppe 23. L'eau traverse le lit 39, s'écoule sur le déflecteur 28 à contre courant des gaz de combustion du brûleur 26 et enfin à travers le lit support percolant 41 où elle est recueillie par la tubulure 38 qui la dirige vers un réservoir de stockage. L'eau issue de ladite tubulure 38 est réchauffée à basse température mais n'est pas dépolluée. Elle est utilisée dans cet état pour alimenter par exemple un circuit de chauffage qui sera décrit plus loin.

L'eau mise en circulation par la dérivation 44a dans la rampe 32 remplit, par l'intermédiaire des tubes 33, la double enveloppe 23a/23b et s'écoule à partir de l'extrémité supérieure ouverte 23d de la chemise 23 le long de la paroi interne 23a et à proximité de la flamme 47 du brûleur 26 pour être recueillie à la partie inférieure du générateur dans le bac de récupération 36 pour être ensuite évacuée par la tubulure 35 dans un réservoir de stockage.

L'eau recueillie par le bac 36 est de qualité potable et est maintenue à un niveau constant 48.

Pour obtenir la dépollution de l'eau, on module son débit en intervenant sur la vanne de réglage 46 et on réchauffe cette eau dans la double enveloppe de la chemise 23 en définissant le couple Temps/Température pour l'adapter à la nature des micro-organismes polluants contenus dans l'eau à traiter. On fait ensuite déborder l'eau de la double enveloppe et l'eau qui ruisselle le long de la face interne de la paroi 23a de la chemise 23 est exposée aux rayonnements infrarouges et ultraviolets produits par la flamme 47 du brûleur, ce qui a pour effet de contribuer à la destruction desdits micro-organismes.

Le débit de l'eau dans la double enveloppe 23a/23b est régulé entre 10 et 30% du débit total de la pompe 43.

Comme dans le générateur de la figure 1, le brûleur à gaz 26 est réglé en fonction de la section et de la hauteur de la chambre de combustion 23, de telle sorte que les gaz de combustion produits par la flamme du brûleur 26 subissent une combustion complète avant d'atteindre la chambre d'échange thermique 25. Les gaz ainsi produits contiennent essentiellement des molécules de dioxyde de carbone qui sont, après refroidissement, lavage et séchage dans le générateur, utilisés directement pour l'alimentation de serres de culture tel que cela sera décrit plus loin au cours de la présente description.

Le circuit de gaz est le suivant : les gaz de combustion produits par le brûleur 26 s'écoulent vers le bas pour occuper la chambre d'échange thermique 25, passent par les orifices 25a de la paroi 25 et sont évacués vers le haut à travers : d'abord le lit inférieur d'anneaux métalliques 41 et passent ensuite par l'espace 29 existant entre l'enceinte 27 et le déflecteur 28 et traversent enfin le lit supérieur d'anneaux en céramique 39 pour être recueillis dans la chambre annulaire 40 et évacués par le conduit 34.

Lors de leur passage dans le lit supérieur d'anneaux en céramique 39, les gaz sont lavés et refroidis par leur contact avec l'eau issue du bac annulaire 30 et qui s'écoule à travers ledit lit supérieur 39.

Le passage des gaz à travers ce lit a également pour effet d'éliminer toute trace de $SO_2$ qui pourrait être nuisible aux plantes, même en quantité infinitésimale et ensuite éliminer les gouttelettes d'eau pulvérisées qui seraient susceptibles d'être entraînées par les gaz de combustion.

La puissance du brûleur 26 et le débit de l'eau modulée par la vanne 46 sont tels qu'on obtient, au niveau du lit inférieur d'anneaux métalliques 42, une charge thermique suffisante pour assurer la température instantanée de l'eau lors de son contact avec lesdits anneaux métalliques du lit inférieur 42.

Au cours des essais du générateur selon le mode d'exécution de la figure 2, il a été utilisé des eaux polluées dont l'analyse de ces eaux donnait les résultats suivants :

- germes totaux 37/ML                     7
- germes totaux 20-22/ML                  5
- coliformes fécaux/100 ML                0
- coliformes totaux/100 ML                50
- anaerobies sulf.red/100 ML              1
- streptocoques fécaux/100 ML             0

Ces eaux ont été envoyée à travers le générateur de la figure 2 dont les caractéristiques ont été données ci-dessus.

Les eaux recueillies à la sortie de la tubulure 35 après un seul passage dans ledit générateur ont été analysées, ce qui a donné les résultats suivants :
- germes totaux 37/ML                     360
- germes totaux 20-22/ML                  240
- coliformes fécaux/100 ML                0
- coliformes totaux/100 ML                0
- anaerobies sulf.red/100 ML              0
- streptocoques fécaux/100 ML             0

Ces eaux ont été qualifiées d'eau de qualité potable par les Laboratoires de Bromatologie du Groupe Bureau Veritas susnommé.

Des prototypes des générateurs selon l'invention furent également testés par un Centre d'Essais Officiel.

Le tableau ci-après donne les résultats obtenus au cours de ces essais.

| Chaudière | Température d'eau (°C) | | Température des fumées (°C) | | ANALYSE DES PRODUITS DE COMBUSTION | | | | | | | | Rendement de combustion % PCI | Débit de gaz (n)m3/h | Puissance KW PCI | Débit des Pompes d'eau m3/H |
|---|---|---|---|---|---|---|---|---|---|---|---|---|---|---|---|---|
| | entrée | sortie | $T_S$ | $T_H$ | CO Vpm $=10^{-6}$ | Teneur en $CO_2$ mesurée $\gamma CO_2(\%)$ | n | $NO_2$ mesuré ppm | NOx mesuré ppm | NOx m3/m3 fumées neutres sèches ppu | NOx mg $NO_2$/m3 fumées sèches 3% de $O_2$ | NOx ng $NO_2$/kwh | | | | |
| 1 | 31 | 44,6 | 31 | 30 | < 2 | 9 | 1,32 | 10 | 32 | 42,3 | 72,3 | 0,37 | 108,2 | 18,5 | 196 | 16 |
| 2 | 31,8 | 46,5 | 33,5 | 32,5 | < 2 | 9,5 | 1,25 | 7 | 33 | 41,3 | 70,6 | 0,33 | 107,8 | 20,0 | 212 | 16 |
| 3 | 33 | 47 | 34,5 | 33,5 | < 2 | 9,6 | 1,24 | 10 | 31 | 38,4 | 65,6 | 0,32 | 107,8 | 19,1 | 202 | 16 |
| 4 | 33 | 44 | 36,5 | 35 | < 2 | 10 | 1,19 | 10 | 33 | 39,3 | 67,1 | 0,31 | 107,4 | 20,1 | 213 | 21 |

On se reporte maintenant à la figure 3 du dessin qui représente une installation selon l'invention comprenant un générateur produisant simultanément de l'eau chaude à basse température et du $CO_2$ froid, lequel est d'un type tel que représenté à la figure 1.

L'eau chaude à basse température et de qualité eau potable produite par ledit générateur qui porte la référence générale 49 est récupérée dans le réservoir d'eau traitée 18.

Cette eau à basse température peut être utilisée pour le chauffage et/ou l'irrigation d'une serre agricole 50. A cet effet, l'eau est prélevée à travers une canalisation 51 et par une pompe 52 à partir du réservoir 18. Le conduit de refoulement 53 de la pompe alimente à travers une vanne de réglage de débit d'eau 54 un paillage radiant connu en soi 55 ou tout autre dispositif convenable disposé dans la serre. L'eau est renvoyée au réservoir 18 par une canalisation de retour 56.

L'eau peut également être refoulée par une pompe 57 à travers une canalisation 58 dans un système localisé d'irrigation quelconque par exemple goutte à goutte, par aspersion, pulvérisation ou autre.

L'installation comporte, tel que cela est représenté à la figure 3, une canalisation d'alimentation 58 qui alimente à travers un régulateur 59 une rampe de distribution 60 constituée par exemple par un tuyau souple en polyéthylène. Sur ce tuyau 60 est branchée, en dérivation, une pluralité de tubes d'irrigation 61 ou tout autre moyen d'irrigation approprié.

Dans l'application d'une telle installation qui produit en continu de l'eau potable, on utilise avantageusement, en période chaude, l'eau produite par le générateur 4a pour l'irrigation des plantes et , en période froide, une partie de cette eau pour le chauffage de la serre 50.

De plus, les gaz de combustion purifiés et refroidis produits par ledit générateur sont prélevés à partir du conduit d'évacuation 20 par une canalisation en dérivation 62 et son envoyés, par exemple sous l'effet d'un ventilateur 63, dans la serre 50. Ce concept, par simple dérivation, présente l'avantage d'éviter toute perturbation de l'évacuation des gaz à travers le conduit 20, quel que soit le volume de gaz prélevé par la canalisation 62 associée au ventilateur 63 pour être envoyé dans la serre. Ceci permet d'ajuster la quantité de $CO_2$ en fonction des variations du cycle d'absorption naturelle du $CO_2$ par les plantes.

Pour la régularisation des niveaux d'eau dans les réservoirs 15 et 18, il est prévu, entre ces réservoirs, un déversoir 64 permettant un transfert d'eau à partir du réservoir 18 dans le réservoir 15. De façon connue, le réservoir 15 comporte un trop-plein 65 pour évacuer l'excédent d'eau, lequel est disposé à un niveau plus bas que celui du déversoir 64.

Le déversoir 64 et le trop-plein 65 sont de préférence des dispositifs du type dit à siphon.

Pour compenser les prélèvements d'eau potable dans l'installation qui vient d'être décrite, le bac 15 comporte une arrivée d'eau 69 régulée par exemple au moyen d'un robinet à flotteur.

On se reporte à la figure 4 du dessin qui illustre une installation selon l'invention comprenant un générateur référencé 66 identique à celui illustré à la figure 2.

Ladite installation est semblable à celle qui vient d'être décrite en référence à la figure 3, ainsi et dans le but d'alléger la présente description, les parties homologues ont été affectées des mêmes références. Le circuit de gaz $CO_2$ et le réseau d'irrigation en eau potable capté dans le réservoir 18 qui ont été déjà décrits ne seront pas de nouveau exposés lors de la description de cette figure. On précise toutefois, dans un souci de précision, que le circuit de gaz 62 est connecté au conduit 34 du générateur 66.

L'eau chaude à basse température et de qualité potable produite par le générateur 66 est envoyée par la tubulure 35 dans le réservoir 18 d'eau traitée.

L'eau potable destinée au réseau d'irrigation 58 à 61 est également captée dans ledit réservoir 18.

L'eau chaude non potable, issue du générateur 66 et évacuée par la tubulure 38, est déversée dans le réservoir d'eau polluée 15 dans lequel est captée, par la pompe 43, l'eau qui est envoyée à travers la tubulure 44 dans les circuits du générateur 66.

Du fait que le circuit de chauffage de la serre 50 ne nécessite pas l'emploi d'eau de qualité potable et selon une variante de l'installation selon l'invention, on alimente ledit circuit 53 à 55 avec de l'eau polluée captée dans le réservoir 15 au moyen de la pompe 52 à laquelle est reliée une tubulure d'aspiration 67 plongée dans ledit réservoir 15. L'eau de chauffage refroidie est renvoyée dans le réservoir 15 par une tubulure de retour 68.

Comme pour l'installation précédemment décrite en référence à la figure 3, ladite installation comporte une arrivée d'eau 69 dans le bac 15 d'eau polluée pour compenser les prélèvements d'eau dans l'installation.

Bien entendu, sans sortir du cadre de l'invention, les parties qui viennent d'être décrites à titre d'exemple pourront être remplacées par l'Homme du Métier par des parties équivalentes remplissant la même fonction.

**Revendications**

1. Générateur (49/66) du type dit chaudière à condensation à circuit ouvert, pour produire simultanément à partir d'eau polluée, de l'eau à basse température de qualité potable et du dioxyde de carbone, comportant une enveloppe extérieure (1/22) au moins un lit d'anneaux en céramique ou similaire disposé dans ladite enveloppe (9/39), un brûleur (6/26) et des moyens (12/12a) disposés à la partie supérieure du générateur (49/66) pour pulvériser l'eau polluée admise dans le générateur sur ledit lit d'anneaux, dont la partie inférieure de ladite enveloppe (1/22) délimite une chambre d'échange thermique (8/25) communiquant avec un bac de récupération d'eau de qualité potable (16/36) situé à la partie inférieure du générateur et un conduit d'évacuation des gaz de combustion (20/34) qui débouche dans la partie supérieure du générateur (49/66) et qui comporte des moyens de prélèvement (62/63) du dioxyde de carbone, caractérisé en ce que ladite enveloppe extérieure (1/22) est cylindrique et verticale et réalisée en un matériau non réfractaire et que le générateur comporte en outre une chemise cylindrique intérieure réalisée en un matériau réfractaire (2/23) disposée coaxialement à ladite enveloppe extérieure (1/22) pour délimiter avec ladite enveloppe un espace annulaire occupé par un lit supérieur d'anneaux en céramique (9/39) et au moins un lit inférieur d'anneaux métalliques (10/42) qui entourent la partie inférieure de ladite chemise (2/23), laquelle est perforée et constitue une chambre d'échange thermique (8/25) et un bac de réception (16/36) de l'eau dépolluée, en ce que la partie supérieure de la chemise (2/23) délimite une chambre de combustion dans laquelle débouche ledit brûleur (6/26), lequel est un brûleur à gaz et est entouré par lesdits moyens pulvérisateurs de l'eau polluée (12/12a-30/31) qui pulvérisent l'eau dans ledit espace annulaire, pour qu'elle s'écoule à travers lesdits anneaux (9/39-10/42) et en ce que la puissance du brûleur (6) et le débit d'eau polluée sont réglés de telle sorte qu'on obtienne au niveau du lit inférieur (10/42) une charge thermique assurant la température instantanée des gouttelettes d'eau, égale ou supérieure à 100°C au moment de leur impact sur lesdits anneaux métalliques dudit lit inférieur (42) et la stérilisation de l'eau polluée en vue de recueillir dans le bac (16/25) de l'eau de qualité potable.

2. Générateur selon la revendication 1, caractérisé en ce qu'il comporte une rampe de pulvérisation d'eau (12), laquelle entoure la tête du brûleur (6) et comporte des diffuseurs (12a) qui projettent l'eau à traiter à travers le lit d'anneaux en céramique (9).

3. Générateur selon la revendication 1, caractérisé en ce que la section du lit inférieur d'anneaux métalliques (10) diminue vers le bas.

4. Générateur selon l'une quelconque des revendications 1 à 3, caractérisé en ce que la paroi (16) qui délimite ladite chambre d'échange thermique (8/25) comporte des perforations régulièrement espacées (16a/25a).

5. Générateur selon l'une quelconque des revendications 1 à 4, caractérisé en ce que le lit supérieur d'anneaux en céramique (9) comporte une partie extrême supérieure annulaire (19) qui est située au-dessus des diffuseurs (12a) de telle sorte que l'eau issue desdits diffuseurs est projetée au-dessous de ladite partie extrême supérieure dudit lit (9).

6. Générateur selon l'une quelconque des revendications 1 à 5, caractérisé en ce que lesdits moyens d'évacuation de l'eau de qualité potable se composent d'une canalisation (17/35) située à la partie inférieure du générateur et qui débouche dans ledit bac de récupération (16/36), laquelle canalisation comporte un siphon (17a/35a) à son extrémité située dans ledit bac (16/36).

7. Générateur (66) selon l'une quelconque des revendications 1 et 4 et 6, caractérisé en ce que la paroi de la chemise intérieure (23) est constituée par une double enveloppe dont l'espace annulaire (24), délimité par les deux enveloppes (23a/23b) est obturé à la partie inférieure (23c) de la chemise (23) où aboutissent plusieurs tubes (33) d'alimentation en eau polluée et en ce que la double enveloppe (24) est ouverte à la partie supérieure (23d) de la chemise (23), de telle sorte que l'eau mise en circulation dans ledit espace annulaire (24) dans le sens opposé à celui de la flamme du brûleur (26) s'écoule le long de la paroi interne (23a) de la double enveloppe à proximité de la flamme du brûleur avant d'être récupérée par le bac (36).

8. Générateur selon la revendication 7, caractérisé en ce qu'il comporte, entre la chemise intérieure (23) à double enveloppe prolongée par le bac de récupération d'eau de qualité potable (36) et l'enveloppe cylindrique extérieure (22), une paroi cylindrique (27a) qui délimite une enceinte cylindrique (27) coaxiale, fermée à sa partie inférieure (27b), laquelle enceinte est ouverte, à sa partie supérieure 27c) et comporte au-dessus, un déflecteur tronconique (28) dont les génératrices de sa paroi (28a) convergent sur l'axe de la chemise cylindrique (23) et du côté du brûleur (26), lequel déflecteur (28) recouvre en débordant la partie ouverte (27c) de l'enceinte cylindrique (27) et délimite avec celle-ci un espace (29) à travers lequel passent les gaz de combustion.

9. Générateur selon l'une quelconque des revendications 7 et 8, caractérisé en ce que le lit inférieur d'anneaux métalliques (42) occupe l'espace annulaire délimité d'une part par la double enveloppe (24) prolongée par la paroi cylindrique perforée (25) et d'autre part par la paroi (27a) de l'enceinte (27) et le déflecteur (28).

10. Générateur selon l'une quelconque des revendications 7 à 9, caractérisé en ce qu'il comporte, au-dessus de la chemise intérieure (23) à double paroi, un bac annulaire (30) qui entoure la tête (26a) du brûleur (26), dans lequel bac (30) est admise l'eau polluée, lequel bac comporte, à sa partie inférieure, des diffuseurs (31) régulièrement répartis autour de ladite chemise intérieure (23) et comporte, en outre, une paroi cylindrique (30a) qui prolonge sa paroi périphérique du côté dudit déflecteur (28), laquelle paroi cylindrique pénètre en partie le lit supérieur d'anneaux en céramique (39), lequel occupe l'espace délimité par l'enveloppe extérieure (22) et l'ensemble central : chemise intérieure (23)/déflecteur (28)/enceinte cylindrique (27), de telle sorte que l'eau issue des diffuseurs (31) est pulvérisée dans l'espace annulaire délimité par ladite paroi cylindrique (30a) et le bac (30) de la chemise intérieure (23) et s'écoule à travers le lit d'anneaux en céramique (39) jusqu'à la partie inférieure du générateur où elle est récupérée.

11. Générateur selon la revendication 10, caractérisé en ce que le lit d'anneaux en céramique (39) est situé au-dessus d'un lit support percolant ( 41 ) qui occupe l'espace annulaire compris entre ladite enceinte cylindrique ( 27 ) et l'enveloppe cylindrique extérieure (22), situé à la partie inférieure du générateur (66).

12. Générateur selon l'une quelconque des revendications 7 à 11, caractérisé en ce qu'un espace (40) est réservé entre la partie supérieure du lit supérieur d'anneaux en céramique (39) et la partie supérieure (22a) du générateur (66) dans lequel espace (40) débouche la conduite (34) d'évacuation des gaz de $CO_2$.

13. Générateur selon l'une quelconque des revendications 7 à 12, caractérisé en ce qu'il comporte dans ledit espace (40) situé au-dessus du lit supérieur d'anneaux en céramique (39) et autour du bac annulaire (30) une rampe d'alimentation (32) en eau polluée à laquelle sont reliés les tubes 33 qui délimitent la double enveloppe (24).

14. Générateur selon l'une quelconque des revendications 7 à 13, caractérisé en ce qu'il comporte, à sa partie inférieure, une tubulure (38) d'évacuation de l'eau s'écoulant à travers le lit d'anneaux en céramique (39) et à travers le lit support percolant (41) par l'intermédiaire d'une crépine (37) située dans l'espace annulaire délimité par l'enveloppe extérieure (22) et l'enceinte cylindrique (27), laquelle crépine (37) est entourée de matériau percolant.

15. Installation comportant un générateur (49) selon l'une quelconque des revendications 1 à 6, pour la production et la distribution d'eau chaude à basse température et de dioxyde de carbone dans une serre agricole (50), caractérisée en ce qu'elle comporte : un premier réservoir d'eau non potable (15), des moyens (13/14) pour capter l'eau dudit réservoir (15) et pour l'envoyer dans ledit générateur (49); un second réservoir (18) alimenté par la tubulure (17) en eau de qualité potable issue du bac de récupération (16) dudit générateur (49); des moyens (51/52/53) pour capter de l'eau de qualité potable contenue dans le second réservoir (18) et pour refouler cette eau dans un circuit de chauffage (53 à 55) à basse température des plantations élevées dans la serre (50) et des moyens (56) pour retourner cette eau refroidie dans ledit second réservoir (18); des moyens (58/57) pour capter de l'eau chaude de qualité potable contenue dans ledit second réservoir (18) et pour refouler cette eau dans un réseau d'irrigation (60/61); et des moyens (62) reliant le conduit d'échappement de $CO_2$ (20) dudit générateur (49) à la serre (50).

16. Installation comportant un générateur (66) selon l'une quelconque des revendications 7 à 14 pour la production et la distribution d'eau chaude à basse température et de dioxyde de carbone dans une serre agricole (50), caractérisée en ce qu'elle comporte un premier réservoir d'eau non potable (15); des moyens (43/44) pour capter l'eau dudit réservoir (15) et pour l'envoyer dans ledit générateur (66); des moyens (38) pour alimenter ledit premier réservoir (15) en eau chaude non potable provenant du générateur (66) et qui a traversé les lits d'anneaux de céramique (39) et le lit support percolant (41); des moyens (67) pour capter de l'eau chaude non potable dans ledit premier réservoir (15) et (52) pour refouler cette eau dans un circuit de chauffage à basse température (53 à 55) des plantations élevées dans la serre (50) et des moyens (68) pour retourner cette eau refroidie dans ledit premier réservoir (15); un second réservoir (18); des moyens (35) pour alimenter ledit second réservoir (18) en eau chaude de qualité potable provenant du bac de récupération (35) du générateur (66); des moyens (57/58) pour capter de l'eau chaude de qualité potable contenue dans le réservoir (18) et pour refouler cette eau dans un réseau d'irrigation (60/61) et des moyens (62) reliant ledit conduit d'échappement du $CO_2$ (34) dudit générateur (66) à la serre (50).

17. Installation selon l'une quelconque des revendications 15 ou 16, caractérisée en ce que les gaz de $CO_2$ sont refoulés dans la serre (50) au moyen d'un ventilateur (63).


## Claims

1. Generator (49/66) of the so-called open circuit condensation boiler type, for simultaneously producing from polluted water, low temperature drinking-water quality water and carbon dioxide, comprising an external envelope (1/22), at least one bed of ceramic rings or the like disposed in said envelope (9/39), a burner (6/26) and means (12/12a) disposed in the upper part of the generator (49/66) for spraying on said bed of rings the polluted water admitted inside the generator, the lower part of said generator envelope (1/22) defines a heat exchange chamber (8/25) which communicates with a collecting container for collecting drinking-water quality water (16/36) located within the lower part of the generator and an exhaust pipe for exhausting fuel gases (20/34) which opens into the upper part of the generator (49/66) and which comprises means (62/63) for removing the carbon dioxide, characterized in that said external envelope (1/22) is cylindrical and vertical and is made of a non-refractory material and in that the generator further comprises an internal cylindrical liner made of a refractory material (2/23) which is disposed coaxially to said external envelope (1/22) so as to define with said envelope an annular space occupied by an upper bed of ceramic rings (9/39) and at least one lower bed of metallic rings (10/42) which surround the lower part of said liner (2/23), which liner is perforated and constitutes a heat exchange chamber (8/25) and a collecting container (16/36) for collecting the clean water, in that the upper part of the liner (2/23) defines a combustion chamber into which said burner (6/26) opens, which burner is a gas burner and is surrounded with said means for spraying the polluted water (12/12a-30/31) in said annular space, whereby it may flow through said rings (9/39-10/42) and in that the power of the burner (6) and the flowrate of the polluted water are adjusted such that a heat load is obtained at the level of the lower bed (10/42), which load ensures the instantaneous temperature of the drops of water, equal or higher than 100°C, when they come in contact with said metallic rings of said lower bed (42) as well as the sterilization of the polluted water with a view to collecting drinking-water quality water inside the container (16/25).

2. Generator according to claim 1, characterized in that it comprises a water spraying ramp (12), which ramp surrounds the head of the burner (6) and comprises diffusers (12a) for projecting the water to be treated throughout the bed of ceramic rings (9).

3. Generator according to claim 1, characterized in that the section of the lower bed of metallic rings (10) decreases.

4. Generator according to any one of claims 1 to 3, characterized in that the wall (16) defining said heat exchange chamber (8/25) has regularly spaced apart perforations (16a/25a).

5. Generator according to any one of claims 1 to 4, characterized in that the upper bed of ceramic rings (9) has an extreme upper annular part (19) which is located on top of the diffusers (12a) such that the water coming from said diffusers is projected below said extreme upper part of said bed (9).

6. Generator according to any one of claims 1 to 5, characterized in that said means for exhausting the drinking-water quality water comprise a duct (17/35) which is located in the lower part of the generator and which opens into said collecting container (16/36), which duct comprises a siphon (17a/35a) at its located inside said container (16/36).

7. Generator (66) according to any one of claims 1 and 4 and 6, characterized in that the wall of the internal liner (23) is constituted by a double envelope whose annular space (24) defined by both envelopes (23a/23b) is closed at the lower part (23c) of the liner (23) where a plurality of pipes (33) for supplying the polluted water end and in that the double envelope (24) is opened at the upper part (23d) of the liner (23), such that the water caused to flow inside said annular space (24) in the direction opposite that of the flame of the burner (26) flows along the internal wall (23a) of the double envelope in the vicinity of the burner's flame before it is collected by the container (36).

8. Generator according to claim 7, characterized in that it comprises, between the internal liner (23) with double envelope which is extended by the container for collecting the drinking-water quality water (36) and the external cylindrical envelope (22), a cylindrical wall (27a) which defines a coaxial, cylindrical enclosure (27) which is closed at its lower part (27b) and opened at its upper part (27c) and comprises on top of it, a truncated deflector (28) whose wall generators (28a) converge on the axis of the cylindrical liner (23) and on the side of the burner (26), which deflector (28) covers the open part (27c) of the cyclindrical enclosure (27) by jutting out from it and defines with the latter a space (29) through which the combustion gases pass.

9. Generator according to any one of claims 7 and 8, characterized in that the lower bed of metallic rings (42) occupies the annular space defined, on the one hand, by the double envelope (24) extended by the perforated cylindrical wall (25) and, on the other hand, by the wall (27a) of the enclosure (27) and the deflector (28).

10. Generator according to any one of claims 7 to 9, characterized in that it comprises, above the double-walled internal liner (23), an annular container (30) which surrounds the head (26a) of the burner (26) and in which the polluted water is admitted, said container comprising, in its lower part, diffusers (31) which are regularly distributed along said internal liner (23) together with a cylindrical wall (30a) which extends its peripheral wall on the side of said deflector (28), said cylindrical wall partly penetrates into the upper bed of ceramic rings (39) occupying the space defined by the external envelope (22) and the central assembly : internal liner (23)/deflector (28) / cylindrical enclosure (27), such that water originating from the diffusers (31) is sprayed in the annular space defined by both said cyclindrical wall (30a) and the container (30) of the internal liner (23), whereby it flows through the bed of ceramic rings (39) until it reaches the lower part of the generator where it is collected.

11. Generator according to claim 10, characterized in that the bed of ceramic rings (39) is located on top of a percolating support bed (41) which occupies the annular space comprised between said cylindrical enclosure (27) and the external cylindrical envelope (22) and which is located in the lower part of the generator (66).

12. Generator according to any one of claims 7 to 11, characterized in that a space (40) is reserved between the upper part of the upper bed of ceramic rings (39) and the upper part (22a) of the generator (66) into which space (40), the exhaust pipe (34) for exhausting the $CO_2$ gases open.

13. Generator according to any one of claims 7 to 12, characterized in that it comprises, in said space (40) which is located above the upper bed of ceramic rings (39) and around the annular container (30), a supply ramp (32) for supplying polluted water and to which ramp are connected the tubes (33) defining the double envelope (24).

14. Generator according to any one of claims 7 to 13, characterized in that it comprises, in its lower part, an exhaust tubulure (38) for exhausting the water flowing through the bed of ceramic rings (39) and through the percolating support bed (41) by means of a strainer (37) located inside the annular space defined by the external envelope (22) and the cylindrical enclosure (27), which strainer (37) is surrounded with percolating material.

15. Installation comprising a generator (49) according to any one of claims 1 to 6, for the production and the distribution of low temperature hot water and carbon dioxide in an agricultural greenhouse (50), characterized in that it comprises: a first tank (15) containing non-drinking water (15), means (13/14) for collecting the water from said tank (15) and for sending said water into said generator (49); a second tank (18) supplied via the tubulure (17) with drinking-water quality water originating from the collecting container (16) of said generator (49); means (51/52/53) for collecting drinking-water quality water contained in the second tank (18) and for forcing said water back to a low temperature heater circuit (53 to 55) of the plantations reared in the greenhouse (50) and means for returning said cooled water to said second tank (18); means (58/57) for collecting drinking-water quality hot water contained inside said second tank (18) and for forcing said water back to an irrigation system (60/61); and means (62) which connect the exhaust pipe for exhausting $CO_2$ (20) from said generator (49) to the greenhouse (50).

16. Installation comprising a generator (66) according to any one of claims 7 to 14, for the production and distribution of low temperature hot water and carbon dioxide in an agricultural greenhouse (50), characterized in that it comprises a first tank (15) containing non-drinking water; means (43/44) for collecting the water from said tank (15) and for sending it into said generator (66); means (38) for supplying said first tank (15) with non-drinking hot water originating from the generator (66) and which has penetrated the beds of ceramic rings (39) and the percolating support bed (41); means (67) for collecting non-drinking hot water from said first tank (15) and for forcing said water back to a low temperature heater circuit (53 to 55) of the plantations reared in the greenhouse (50) and means (68) for returning said cooled water to said first tank (15); a second tank (18); means (35) for supplying said second tank (18) with drinking-water quality hot water originating from the collecting container (35) of the generator (66); means (57/58) for collecting drinking-water quality hot water contained inside the tank (18) and for forcing said water back to an irrigation system (60/61) and means (62) which connect said exhaust pipe for exhausting $CO_2$ (34) from said generator (66) to the greenhouse (50).

17. Installation according to any one of claims 15 or 16, characterized in that the $CO_2$ gases are forced back to the greenhouse (50) by means of a ventilator (63).

## Patentansprüche

1. Generator (49/66) des Typs Kondensationskessel mit offenem Kreislauf, zur Herstellung von eine niedrige Temperatur aufweisenden Trinkwasser sowie Kohlendioxid aus verunreinigtem Wasser, bestehend aus einem äußeren Gehäuse (1/22), wenigstens einem innerhalb des erwähnten Gehäuses angeordneten ringförmigen Bett aus Keramik oder einem vergleichbaren Material bestehenden Ringen (9/39), einem Brenner (6/26) sowie im oberen Teil des Generators (49/66) angeordneten Mitteln (12/12a), mit welchen das in dem Generator eingeleitete verunreinigte Wasser auf die Keramikringe zur Versprühung gelangt, wobei der untere Teil (1/22) des Gehäuses eine thermische Austauschkammer (8/25) aufweist, welche mit einem im unteren Teil des Generators angeordneten, der Aufnahme des Trinkwassers dienenden Auffangbecken (16/36) in Verbindung steht, und wobei eine der Wegleitung der Verbrennungsgase dienende Rohrleitung (20/34) vorgesehen ist, welche in den oberen Teil des Generators (49/66) mündet und welche der Entfernung des Kohlendioxids dienende Mittel (62/63) aufweist,
dadurch **gekennzeichnet**, daß das äußere Gehäuse (1/22) in Form eines vertikalen Zylinders ausgebildet ist und aus einem nicht feuerfesten Material besteht, während koaxial zu diesem äußeren Gehäuse (1/22) eine aus einem feuerfesaten Material bestehende zylindrische Innenwandung (2/23) vorgesehen ist, wodurch in Verbindung mit dem erwähnten Gehäuse ein Ringraum gebildet ist, welcher der Aufnahme eines oberen Bettes aus Keramikringen (9/39) sowie wenigstens einem unteren Bett aus Metallringen (10/42) dient, wobei letzteres den unteren Teil der erwähnten Wandung (2/23) umgibt, die mit entsprechenden Perforationen versehen ist und sine thermische Austauschkammer (8/25) sowie eine der Aufnahme des gereinigten Wassers dienendes Auffangbecken (16/36) bildet, ferner daß der obere Teil der Wandung (2/23) eine Verbrennungskammer begrenzt, in welche der als Gasbrenner ausgebildete Brenner (6/26) hineinragt und welche von den der Zerstäubung des verunreinigten Wassers dienenden Mitteln (12/12a-30/31) umgeben ist, die das Wasser innerhalb des Ringraumes zerstäuben, so daß dasselbe entlang der Ringe (9/39-10/42) entlang fließt und daß die Leistung des Brenners (6) und die Zufuhr des verunreinigten Wassers derart geregelt sind, daß in der Höhe des unteren Bettes (10/42) eine thermische Aufheizung erfolgt, auf Grund welcher die Momentantemperatur der Wassertröpfchen bei ihrem Aufprall auf den metallischen Ringen des unteren Bettes (42) gleich oder größer 100 °C ist und dabei eine Sterilisation des verunreinigten Wassers im Hinblick auf das Aufsammeln des Trinkwassers innerhalb des Auffangbeckens (6/25) zustandekommt.

2. Generator nach Anspruch 1,
dadurch **gekennzeichnet**, daß der Kopf des Brenners (6) von einer Wasserzerstäubungseinrichtung (12) umgeben ist, welche mit Zerstäuberköpfen (12a) versehen ist, von denen aus das zu behandelnde Wasser in Richtung des Bettes aus Keramikringen (9) zur Versprühung gelangt.

3. Generator nach Anspruch 1,

dadurch **gekennzeichnet**, daß der Querschnitt des unteren Bettes von Metallringen (10) nach unten hin abnimmt.

4. Generator nach einem der Ansprüche 1 bis 3,
dadurch **gekennzeichnet**, daß die die thermische Austauschkammer (8/25) begrenzende Wandung (16) mit in regalmäßigen Abständen angeordneten Durchbrechungen (16a/25a) versehen ist.

5. Generator nach einem der Ansprüche 1 bis 4,
dadurch **gekennzeichnet**, daß das obere Bett aus Keramikringen (9) einen oberhalb der Sprühköpfe (12) angeordneten oberen begrenzungsbereich (19) aufweist, so daß das aus den Sprühköpfen ausgesprühte Wasser unterhalb dieses oberen Bettes (9) zum Aufsprühen gelangt.

6. Generator nach einem der Ansprüche 1 bis 5,
dadurch **gekennzeichnet**, daß die der Entfernung des Trinkwassers dienenden Mittel im wesentlichen durch eine im unteren Teil des Generators angeordnete Rohrleitung (17/35) gebildet sind, welche in den Auffangbehälter (16/36) einmündet, wobei diese Rohrleitung an ihrem in dem Auffangbehälter (16/36) eimündendem Ende mit einem Siphon (17a/35a) versehen ist.

7. Generator (66) nach einem der Ansprüche 1, 4 oder 6,
dadurch **gekennzeichnet**, daß der Inneneinsatz (23) doppelwandig ausgebildet ist, wobei der durch die beiden Wandungen (23a/23b) gebildete Ringraum (24) durch den unteren Teil (23c) des Inneneinsatzes (23) begrenzt ist, in welchen mehrere Rohrlei- tungen (23) für das verunreinigte Wasser einmünden, währen der doppelwandige Einsatz (24) in seinem oberen Bereich (23d) offen ist, so daß das in den Ringraum (24) eingeleitete Wasser in entgegengesetzter Richtung zu den Flammen des Brenners (26) entlang der Innenwandung (23a) des doppelwandigen Einsatzes in der Nähe der Flammen des Brenners entlang fließt, bevor dasselbe in das Auffangbecken (36) einströmt.

8. Generator nach Anspruch 7,
dadurch **gekennzeichnet**, daß zwischen der Innenwandung (23) des doppelwandigen Einsatzes in Richtung des dem Auffangen des Trinkwassers dienenden Auffangbecken (36) und dem äußeren zylindrischen Gehäuse (22) eine der Begrenzung des zylindrischen Gehäuses (27) dienende koaxiale Wandung (27a) vorgesehen ist, welche in ihrem unteren Bereich (27b) geschlossen ist, während dieselbe in ihrem oberen Bereich (27c) geöffnet ist und dabei einen kegelstumpfförmigen Deflektor (28) aufweist, dessen Mantellinien (28a) in Richtung der Achse des doppelwandigen Einsatzes (23) auf der Seite des Brenners (26) konvergieren, wobei dieser Deflektor (20) den offenen Teil (27c) der zylindrischen Wandung (27) überlappend abdeckt und dabei mit demselben einen Raum (29) begrenzt, durch welchen die Verbrennugsgase geleitet sind.

9. Generator nach einem der Ansprüche 7 oder 8,
dadurch **gekennzeichnet**, daß das un tere Bett aus Metallringen (42) den Ringraum füllt, welcher auf der einen Seite durch den doppelwandigen Einsatz (24) und die daran anschließende zylindrische perforierte Wandung (25) und auf der anderen Seite durch die Wandung (27a) des Gehäuses (27) und des Deflektors (28) begrenzt ist.

10. Generator nach einem der Ansprüche 7 bis 9,
dadurch **gekennzeichnet**, daß derselbe oberhalb des doppelwandigen Einsatzes (23) einen den Kopf (26a) des Brenners (26) umgebenden, der Aufnahme des verunreinigten Wassers dienenden Ringbehälter (30) aufweist, welcher in seinem unteren Bereich mit den entlang des doppelwandigen Einsatzes (23) in regelmäßigen Abständen angeordneten Sprühköpfen (31) versehen ist, und welche zusätzlich eine zylindrische Wandung (30a) aufweist, die die periphere Außenwandung des Ringbehälters in Richtung des Deflektors (28) verlängert, wobei diese zylindrische Wandung zum Teil in das obere Bett aus Keramikringen (39) eindringt, welches den durch das äußere Gehäuse (22) und die mittlere Anordnung mit seinem inneren Einsatz (23) dem Deflektor (28) und der zylindrischen Wandung (27) derart auffüllt, daß das von den Sprühköpfen (31) abgegebene Wasser hinter dem durch die zylindrische Wandung (30a) und dem Ringbehälter (30) des Inneneinsatzes (23) begrenzten Ringraum zur Versprühung gelangt und entlang des aus Keramikringen bestehenden Bettes bis in den unteren Bereich des Generators fließt, wo der Auffangvorgang stattfindet.

11. Generator nach Anspruch 10,

dadurch **gekennzeichnet**, daß das aus Keramikringen (39) bestehende Bett oberhalb eines perkolierenden Stützbettes (41) angeordnet ist, welches im unteren Teil des Generators (66) den Ringraum zwischen der zylindrischen Wandung (17) und dem zylindrischen Gehäuse (29) einnimmt.

12. Generator nach einem der Ansprüche 7 bis 11,
dadurch **gekennzeichnet**, daß zwischen dem oberen Teil des aus Keramikringen bestehenden Bettes (39) und dem oberen Teil (22a) des Generators (66) ein Raum (40) vorgesehen ist, in welchen die Rohrleitung (34) für das Ableiten des Kohlendioxids einmündet.

13. Generator nach einem der Ansprüche 7 bis 12,
dadurch **gekennzeichnet**, daß in den Hohlraum (40), welcher oberhalb des aus Keramikringen bestehenden Bettes (39) und um den Ringbehälter (30) herum angeordnet ist, eine Speiseleitung (32) für das verunreinigte Wasser hineinführt, welche mit dem doppelwandigen Einsatz (24) begrenzenden Rohrleitungen (33) verbunden ist.

14. Generator nach einem der Ansprüche 7 bis 13,
dadurch **gekennzeichnet**, daß derselbe in seinem unteren Bereich eine Rohrleitung (38) zur Ableitung des Wassers aufweist, welches durch das aus Keramikringen bestehende Bett (39) und das perkolierende Trägerbett (41) nach unten fließt, wobei zusätzlich innerhalb des durch das äußere Gehäuse (22) und die zylindrische Wandung (17) begrenzten Ringraumes ein Pumpenkorb (37) vorgesehen ist, welcher von dem Perkolationsmaterial umgeben ist.

15. Anlage mit einem Generator (49) nach einem der Ansprüche 1 bis 6 zur Erzeugung und Verteilung von Warmwasser und Kohlendioxid innerhalb eines Gewächshauses (50), dadurch **gekennzeichnet**, daß dieselbe folgende Elemente aufweist: einen der Aufnahme von nichttrinkbarem Wasser dienendem ersten Behälter (15); Förderelemente (13/14), welche das Wasser des ersten Behälters (15) entnehmen und dem Generator (49) zuleiten; einen zweiten Behälter (18), welchem über eine Rohrleitung (17) Trinkwasser zugeleitet ist, das von dem Auffangbecken (16) des Generators (49) zugeleitet ist; Förderelemente (51/52/53), welche das innerhalb des zweiten Behälters (18) vorhandene Wasser mit Trinkwasserqualität entnehmen und einem im Bereich der Pflanzen des Gewächshauses (50) angeordneten Heizkreis (53-55) zuleiten; Einrichtungen (56), mit welchen das auf diese Weise abgekühlte Wasser zurück zu dem zweiten Behälter (18) geleitet wird; ferner Einrichtungen (57/58), mit welchen das innerhalb des zweiten Behälters (18) vorhandene erwärmte Wasser mit Trinkwasserqualität entnommen und einem Berieselungssystem (60/61) zuleitbar ist; sowie Einrichtungen (62), welche die die Abgabe des Kohlendioxids dienende Rohrleitung (20) des Generators (49) mit dem Gewächshaus verbinden.

16. Anlage mit einem Generator (66) nach einem der Ansprüche 7 bis 14 zur Erzeugung vom Warmwasser und Kohlendioxid innerhalb eines Gewächshauses (50),
dadurch **gekennzeichnet**, daß dieselbe folgende Elemente aufweist: einen ersten Behälter (15) für die Aufnahme von nicht-trinkbarem Wasser; Einrichtungen (43/44) zur Ableitung des Wassers des Behälters (15) und Zufuhr zu dem Generator (66); eine Einrichtung (38), mit welcher das aus dem Generator (66) stammende nichttrinkbare Warmwasser, welches das aus Keramikschringen bestehenden Bett (39) und das perkolierende Trägerbett (41) durchflossen hat, dem ersten Speicher (15) zuzuleiten; eine Einrichtung (67), mit welcher das in dem ersten Behälter (15) vorhandene nicht-trinkbare Warmwasser abgeleitet und einem im Bereich der Pflanzen des Gewächshauses (50) vorhandenen Heizkreis (53-55) zugeleitet wird; eine Einrichtung (68), mit welcher das auf diese Weise abgekühlte Wasser zurück in den ersten Behälter (15) geleitet wird; einem zweiten Behälter (18); eine Einrichtung (35), mit welcher das in dem Auffangbecken (35) des Generators (66) aufgefangene Warm- wasser mit Trinkwasserqualität in den zweiten Behälter (18) geleitet wir; Einrichtungen (57/58), mit welchen das innerhalb des Behälters (18) vorhandene Warmwasser mit Trinkwasserqualität zur Entnahme gelangt und einem Berieselungssystem (60/61) zugeführt wird; sowie eine Einrichtung (62), welche die der Abgabe des Kohlendioxids dienende Rohrleitung des Generators (66) mit dem Gewächshaus (50) verbindet.

17. Anlage nach Anspruch 15 oder 16, dadurch **gekennzeichnet**, daß das Kohlendioxidgas mit Hilfe eines Ventilators (63) in das Gewächshaus (50) zur Einleitung gelangt.

# FIG.1

FIG.2

FIG. 3

FIG.4